# EUROPEAN PATENT APPLICATION

(11) **EP 1 842 764 A2**
(43) Date of publication of application: **10.10.2007**
(21) Application number: 07105527.1
(22) Date of filing: 03.04.2007
(51) Int. Cl.: B62D 15/02

(54) **Rotational angle detector**

(30) Priority: 03.04.2006 JP 2006101754; 10.04.2006 JP 2006107355
(71) Applicant: Matsushita Electric Industrial Co., Ltd., Kadoma-shi Osaka 571-8501 (JP)
(72) Inventor: Shiraga, Shozoh Matsushita Electric Ind. Co., Ltd., Shiromi 1-chome, Chuo-ku, Osaka-shi Osaka 540-6319 (JP); Tomino, Yasunori Matsushita Electric Ind. Co., Ltd., Shiromi 1-chome, Chuo-ku, Osaka-shi Osaka 540-6319 (JP); Onishi, Masahide Matsushita Electric Ind. Co., Ltd., Shiromi 1-chome, Chuo-ku, Osaka-shi Osaka 540-6319 (JP)
(74) Representative: Grünecker, Kinkeldey, Stockmair & Schwanhäusser Anwaltssozietät

(57) **Abstract**

A rotational angle detector (20) includes a rotor (11), a detecting body (12), a light emitting device (14), an annular-shaped light receiving device (16), and a controller (17). The detecting body (12) rotates relatively to the rotor (11) and is provided with a light transmitting path (13), which permits light to pass in a direction parallel to a rotating axis thereof. The light emitting device (14) is provided at a position to emit light toward the detecting body (12) in a direction parallel to the rotating axis of the detecting body (12). The light receiving device (16) is arranged on an opposite side of the detecting body (12) with respect to the light emitting device (14) and outputs a light receiving range. The controller (17) is connected to the light receiving device (16) and detects a rotational angle of the rotor (11) based on the light receiving range output from the light receiving device (16).

## Description

### TECHNICAL FIELD

The present invention relates to a rotational angle detector mainly used for detecting a rotational angle of a steering of an automobile.

### BACKGROUND ART

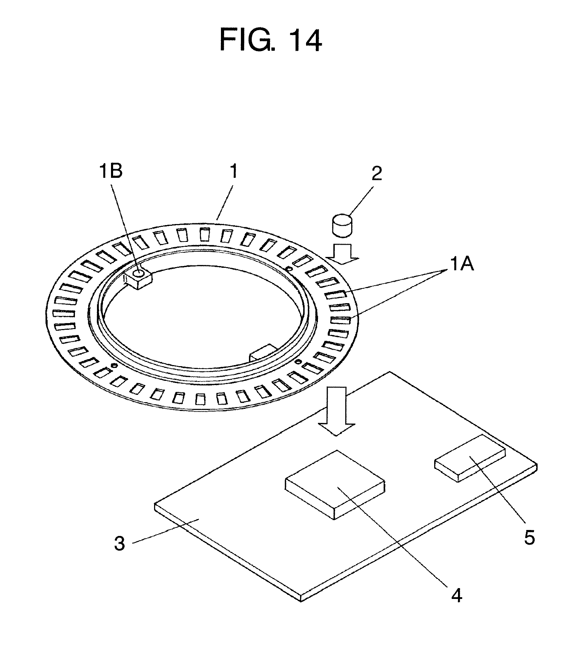

Automobiles are becoming increasingly functional in recent years. As a part of such a move, more and more automobiles are using a rotation angle detector to detect the rotational angle of the steering wheel for break control, skid control, and other purposes. A conventional rotational angle detector is described as follows with reference to Fig. 14.

Fig. 14 is an exploded, perspective view showing a conventional, rotational angle detector. Slits 1A are formed at an interval of 9° or 4.5° on an outer periphery of rotor 1 made of a metal. Rotor 1 is provided engaging portion 1B at the center thereof to engage with a steering shaft (not shown).

Light emitting device 2 is arranged above slits 1A of rotor 1. Light receiving device 4 is mounted below light emitting device 2 to be opposed thereto. Wiring board 3 is arranged substantially in parallel to an underside of rotor 1 and wiring patterns (not shown) are formed on both surfaces of wiring board 3. Controller 5 is formed on wiring board 3 using electronic parts such as microcomputer, etc. Controller 5 is connected to light emitting device 2 and light receiving device 4. A rotational angle detector is constructed in this manner.

With the rotational angle detector, controller 5 is connected to an electronic circuit (not shown) of an automobile body through a connector (not shown), etc. On the other hand, the steering shaft is inserted through engaging portion 1B disposed in the center of rotor 1 to be mounted to an automobile.

When the steering is rotated, rotor 1 is rotated accordingly. When slit 1A is positioned below light emitting device 2, light from light emitting device 2 passes through slit 1A. When a location in which any slit 1A is not formed is positioned below light emitting device 2, light from light emitting device 2 is intercepted. Light receiving device 4 receives the light from light emitting device 2 passing through slit 1A to output, for example, a pulse signal of 0 and 1 to controller 5.

Controller 5 counts the number of signals from light receiving device 4 and multiplies the number of signals by an interval of 9° or 4.5° of slits 1A, which is beforehand stored in controller 5. In this manner, controller 5 detects a rotational angle of rotor 1, that is, a rotational angle of the steering. Accordingly, a resolution of a rotational angle is determined by an interval of slits 1A formed on the outer periphery of rotor 1.

However, the size of rotor 1 and the interval of slits 1A are susceptible to restrictions on a space in a location, in which the detector is mounted, and restrictions inmaking the detector. Therefore, it is in some cases difficult to make the detector extremely small. In addition, when the detector is made excessively small, the cause for misdetection is generated in the case where dust or the like adheres, so that slits 1A are generally provided at an interval of 9° or 4.5°. In this manner, since a conventional, rotational angle detector has limits in decreasing an interval of slits 1A, it is difficult to detect a rotational angle with a high resolution.

### SUMMARY OF THE INVENTION

The present invention provides a rotational angle detector that can detect a rotational angle with a high resolution in a simple construction. A rotational angle detector of the present invention includes a rotor, a detecting body, a light emitting device, an annular-shaped light receiving device,and a controller. The detecting body rotates relatively to the rotor and is provided with a light transmitting path, which permits light to pass in a direction parallel to a rotating axis thereof. The light emitting device is provided in a position and emits light toward the detecting body in a direction parallel to the rotating axis of the detecting body. The light receiving device is arranged on an opposite side of the detecting body to the light emitting device and outputs a light receiving range. The controller is connected to the light receiving device and detects a rotational angle of the rotor on the basis of the light receiving range, which is output from the light receiving device. The annular-shaped light receiving device is used to detect the rotational angle of the rotor, which rotates relatively to the rotor, whereby it is possible to detect the rotational angle of the rotor at an interval of 1° or less, namely with a high resolution.

### BRIEF DESCRIPTION OF DRAWINGS

Fig. 1 is an exploded, perspective view showing a rotational angle detector according to a first exemplary embodiment of the present invention.
Figs. 2A to 2C are plan views showing positional relationships of a detecting body and a light receiving device in the rotational angle detector shown in Fig. 1.
Fig. 2D is a plan view showing a positional relationship of anther detecting body and the light receiving device in the rotational angle detector shown in Fig. 1.
Figs. 3A to 3C are views illustrating waveforms output from the light receiving device in the rotational angle detector shown in Fig. 1.
Figs. 4A to 4C are plan views showing the positional relationships of still other detecting bodies and a light receiving device in the rotational angle detector according to the first exemplary embodiment of the invention.
Fig. 5A is a view illustrating a waveform output from the light receiving device of the rotational angle detector, which is constructed in the positional relationship shown in Fig. 4A.
Fig. 5B is a view illustrating a waveform output from the light receiving device of the rotational angle detector, which is constructed in the positional relationship shown in Fig. 4B.
Fig. 6 is an exploded, perspective view showing another rotational angle detector according to the first exemplary embodiment of the present invention.
Fig. 7 is an exploded, perspective view showing a rotational angle detector according to a second exemplary embodiment of the present invention.
Fig. 8A is a plan view showing a positional relationship of a first detecting body and a light receiving device in the rotational angle detector shown in Fig. 7.
Fig. 8B is a plan view showing a positional relationship of a second detecting body and the light receiving device in the rotational angle detector shown in Fig. 7.
Fig. 8C is a plan view showing a positional relationship of another first detecting body and the light receiving device in the rotational angle detector shown in Fig. 7.
Fig. 9A is a view illustrating a waveform output from the light receiving device in the construction shown in Fig. 8A.
Fig. 9B is a view illustrating a waveform output from the light receiving device in the construction shown in Fig. 8B.
Fig. 9C is a view illustrating a composite waveform of Fig. 9A and Fig. 9B.
Fig. 10A is a plan view showing a state, in which the first detecting body is further rotated 90° from the state shown in Fig. 8A.
Fig. 10B is a plan view showing a state, in which the first detecting body is further rotated 90° from the state shown in Fig. 8B.
Fig. 11A is a view illustrating a waveform output from the light receiving device in the state shown in Fig. 10A.
Fig. 11B is a view illustrating a waveform output from the light receiving device in the state shown in Fig. 10B.
Fig. 11C is a view illustrating a composite waveform of Fig. 11A and Fig. 11B.
Fig. 12A is a plan view showing a state , in which the first detecting body is further rotated 90° from the state shown in Fig. 10A.
Fig. 12B is a plan view showing a state , in which the first detecting body is further rotated 90° from the state shown in Fig. 10B.
Fig. 13A is a view illustrating a waveform output from the light receiving device in the state shown in Fig. 12A.
Fig. 13B is a view illustrating a waveform output from the light receiving device in the state shown in Fig. 12B.
Fig. 13C is a view illustrating a composite waveform of Fig. 13A and Fig. 13B.
Fig. 14 is an exploded, perspective view showing a conventional, rotational angle detector.

### DETAILED DESCRIPTION OF THE INVENTION

### First Exemplary Embodiment

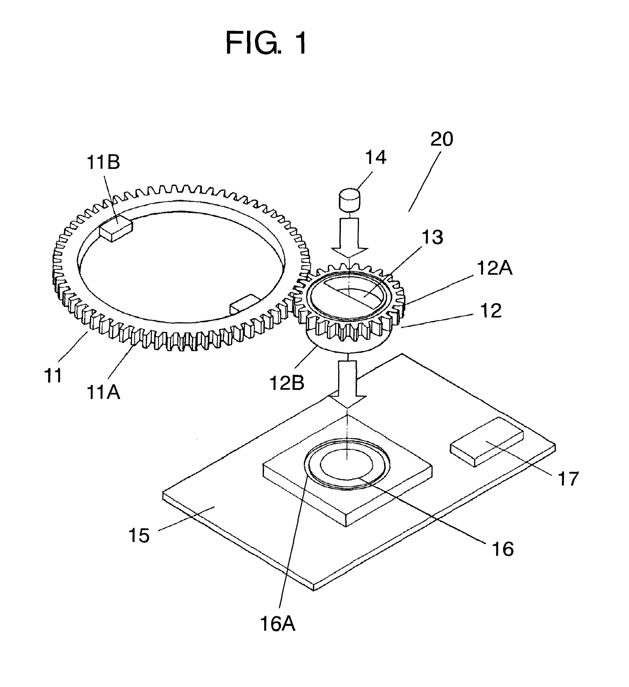

Fig. 1 is an exploded, perspective view showing a rotational angle detector according to a first exemplary embodiment of the present invention. Rotational angle detector 20 includes rotor 11, detecting body 12 being a first detecting body, light emitting device 14 being a first light emitting device, light receiving device 16 being a first, annular-shaped light receiving device, and controller 17 mounted to wiring board 15. Spur gear portion 11A is formed on an outer periphery of rotor 11 made of an insulating resin or a metal. Engaging portion 11B is provided at a center of rotor 11. Engaging portion 11B is engaged with a steering shaft (not shown), which extends therethrough.

Spur gear portion 12A having, for example, the number of teeth being 1/3 the number of teeth of rotor 11 is formed on an outer periphery of detecting body 12, which is made of an insulating resin or a metal. Spur gear portion 12A of detecting body 12 meshes with spur gear portion 11A of rotor 11 and detecting body 12 is provided with light transmitting path 13 being a semi-circular through-hole. That is, detecting body 12 rotates relatively to rotor 11 and is provided with light transmitting path 13, which is a first semi-circular light transmitting path to permit light to pass in a direction parallel to a rotating axis of detecting body 12. Light transmitting path 13 may be filled with a transparent resin or the like, or closed from above and under by transparent window materials. Hollow, cylindrical-shaped rotating cylinder 12B projecting downward is formed below detecting body 12.

Light emitting device 14 composed of a light emitting device or the like is arranged above light transmitting path 13 of detecting body 12. That is, light emitting device 14 is provided at a position, in which light emitting device 14 emits light toward detecting body 12 in a direction parallel to the rotating axis of detecting body 12.

Wiring board 15 is arranged substantially in parallel to undersides of rotor 11 and detecting body 12 and wiring patterns (not shown) are formed on both surfaces of wiring board 15. Light receiving device 16 is structured, for example, to include photosensors arranged 360 at intervals of, for instance, 1° in a ring-shaped manner. Light receiving device 16 is mounted on wiring board 15 so as to face the underside of detecting body 12. That is, light receiving device 16 is arranged on an opposite side of detecting body 12 with respect to light emitting device 14. Rotating groove 16A is provided on an upper surface of light receiving device 16 to permit rotating cylinder 12E of detecting body 12 to be rotatably inserted thereinto.

Controller 17 is formed on wiring board 15 using electronic parts such as microcomputer, etc. Controller 17 is connected to light emitting device 14 and light receiving device 16. That is, controller 17 is connected to light emitting device 14 and light receiving device 16 and detects a rotational angle of rotor 11 from a light receiving range of light receiving device 16.

With rotational angle detector 20 constructed in the manner described above, controller 17 is connected to an electronic circuit (not shown) of an automobile body through a connector, lead wire (not shown), etc. Steering shaft is inserted into the center of rotor 11. In this manner, rotational angle detector 20 is mounted to an automobile.

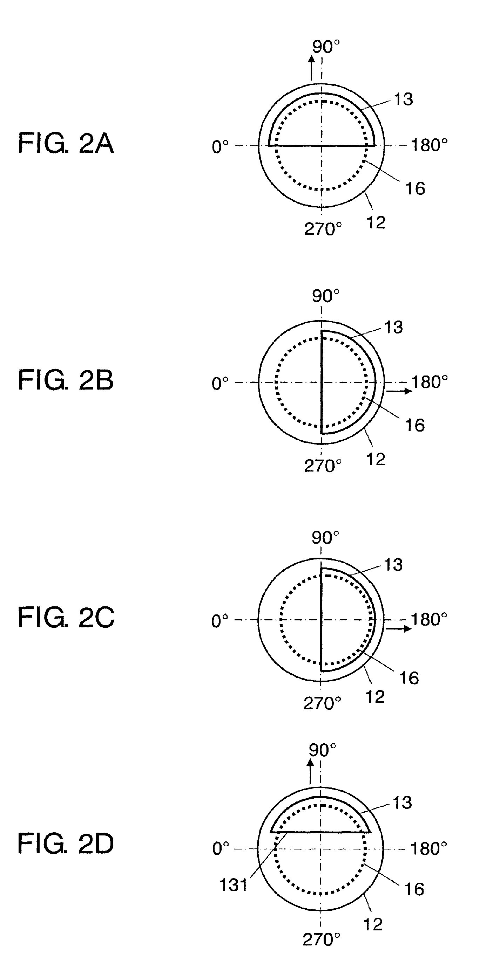

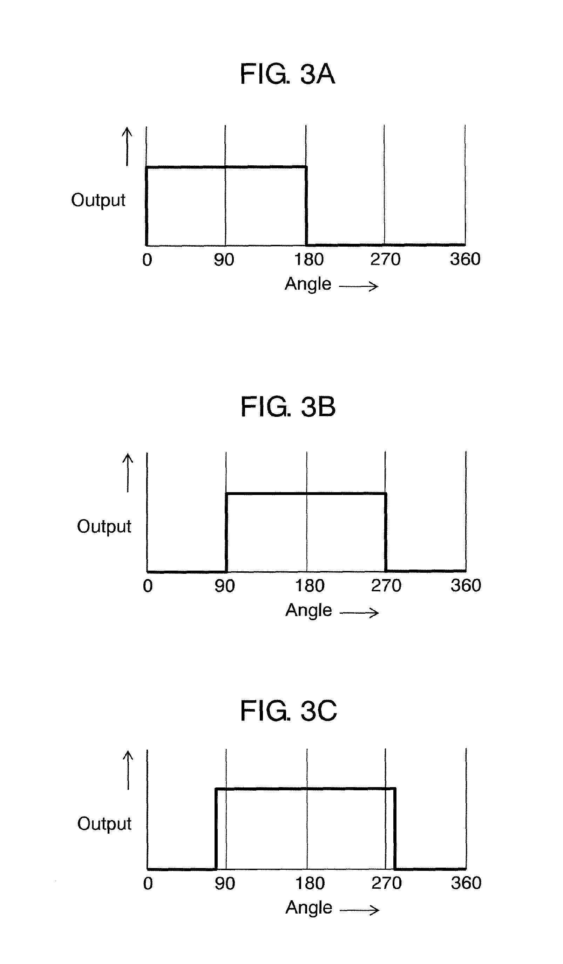

Subsequently, a method, in which controller 17 detects a rotational angle of rotor 11, will be described with reference to Figs. 2A to 3C. Figs. 2A to 2C are plan views showing the positional relationships of detecting body 12 and light receiving device 16. Figs. 3A to 3C are views illustrating waveforms output from light receiving device 16.

When the steering is rotated, rotor 11 is rotated correspondingly and detecting body 12 of which spur gear portion 12A meshes with spur gear portion 11A is also rotated. In a state, in which detecting body 12 is rotated 90° as shown in Fig. 2A, for example, light receiving device 16 receives the light from light emitting device 14, which passes through light transmitting path 13, in the range of 0° to 180°. Thus, a signal having a waveform shown in Fig. 3A is output to controller 17.

Controller 17 detects from the signal that the light of light emitting device 14 passes through light transmitting path 13 in the range of 0° to 180°. Controller 17 thus detects 90° being an intermediate angular position in the light receiving range of light receiving device 16 as a rotational angle of detecting body 12.

In a state, in which the steering is rotated further and detecting body 12 is rotated 180° as shown in Fig. 2B, light receiving device 16 receives the light in the range of 90° to 270° to output a signal shown in Fig. 3B to controller 17. Controller 17 detects that the light from light emitting device 14 passes through light transmitting path 13 in the range of 90° to 270°. Controller 17 thus detects 180° being an intermediate angular position between 90° and 270° as a rotational angle of detecting body 12.

In the case where a rotational angle of detecting body 12 is less than 90°, for example, 30°, light receiving device 16 receives the light from light emitting device 14, which passes through light transmitting path 13, in the range of 300° to 120°. Controller 17 detects that the light from light emitting device 14 passes through light transmitting path 13 in the range of 300° to 120°. Controller 17 thus detects 30° being an intermediate angular position between 300° and 120° as a rotational angle of detecting body 12.

When rotor 11 is rotated beyond 120°, detecting body 12 is rotated beyond 360°. For example, when rotor 11 is rotated 150°, detecting body 12 is rotated 450°. In this case, the light receiving range of light receiving device 16 becomes the same as that in the case where detecting body 12 is rotated 90°. In order to discriminate between such states, controller 17 counts the number of rotations of detecting body 12. In case of reverse rotating, there occurs likewise the case where the light receiving range of light receiving device 16 is put in the same state. Therefore, controller 17 stores a rotating direction, in which detecting body 12 is rotated.

As described above, 360 of photosensors are arranged at intervals of 1° in a ring-shaped manner to form light receiving device 16. Therefore, for rotating of detecting body 12, controller 17 can detect a rotational angle of detecting body 12 at intervals of 1°. The number of teeth of detecting body 12 is set to be 1/3 the number of teeth of rotor 11. That is, while rotor 11 makes one rotation, detecting body 12 makes three rotations. Therefore, controller 17 can detect a rotational angle of rotor 11 with a high resolution of about 0.33°, which is obtained by dividing a resolution of 1° of a rotational angle of detecting body 12 by 3. In addition, because of being hard to be influenced by dust, etc., rotational angle detector 20 capable of detecting a rotational angle with a high resolution can be formed in a simple construction.

Light receiving device 16 receives the light from light emitting device 14, which passes through light transmitting path 13 of detecting body 12. Controller 17 detects an angle corresponding to an intermediate angular position in the light receiving range of light receiving device 16 as a rotational angle of detecting body 12. Therefore, even in the case where some off-center is generated between detecting body 12 and light receiving device 16 when rotational angle detector 20 is constructed, or the like, it is possible to correctly detect a rotational angle.

That is, in the case where light receiving device 16 is shifted rightward relatively to detecting body 12 as shown in Fig. 2C, light receiving device 16 receives light in the range of, for example, 87° to 273° although it should receive light in the range of 90° to 270° by right. Light receiving device 16 outputs a signal shown in Fig. 3C to controller 17. Based on the signal, controller 17 detects an angle corresponding to an intermediate angular position in the light receiving range of light receiving device 16 as a rotational angle of detecting body 12. That is, controller 17 detects, as a rotational angle, the same angle of 180° as that in the case where no off-center is present. In this manner, even in the case where some off-center is generated on respective, constituent parts, rotational angle detector 20 can correctly detect a rotational angle.

In order that controller 17 correctly detects a rotational angle of detecting body 12 even when light receiving device 16 is shifted relatively to detecting body 12, light transmitting path 13 may be shaped as shown in the plan view of Fig. 2D in addition to being shaped as shown in Fig. 2A. That is, it suffices the requirement that straight line 131 connecting between both ends of light transmitting path 13, which correspond to both ends of the light receiving range of light receiving device 16, constitutes a part of light transmitting path 13.

Even when light transmitting path 13 is sector-shaped in planar configuration, controller 17 can detect an intermediate angular position in the light receiving range of light receiving device 16 as a rotational angle of detecting body 12. However, the shape described above is more preferable. Semi-circular shaped light transmitting path 13 shown in Fig. 2A is a typical example.

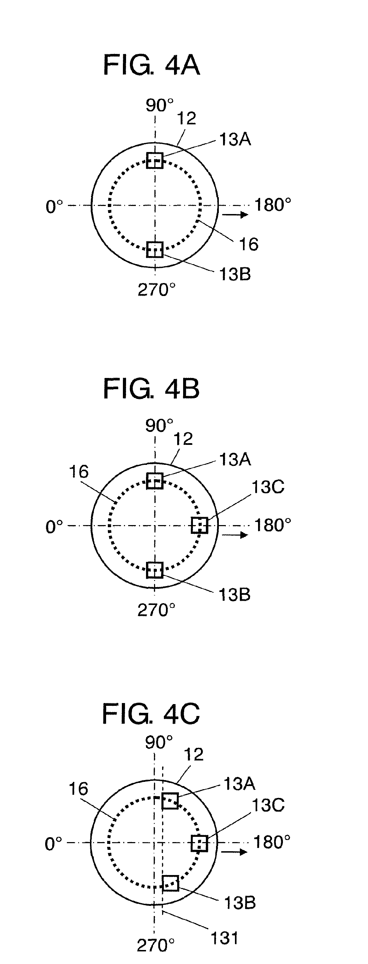

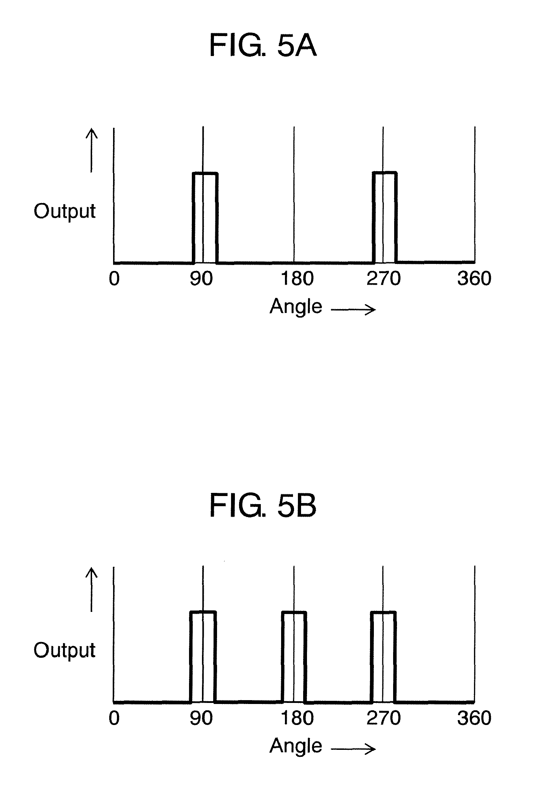

Subsequently, an explanation will be given to other structures of detecting body 12. Figs. 4A and 4B are plan views showing other light transmitting paths of detecting body 12 and Figs. 5A and 5B are views illustrating waveforms output from light receiving device 16 in the cases where such light transmitting paths are provided.

While detecting body 12 in the structure shown in Fig. 2A is provided with semi-circular shaped light transmitting path 13, light transmitting paths 13A, 13B being first and second light transmitting paths are provided in opposite positions about a center of detecting body 12 in the structure shown in Fig. 4A. Light receiving device 16 receives light from light emitting device 14 which passes through them.

With this structure, light receiving device 16 outputs to controller 17 two signals in the vicinity of 90° (for example, 85° to 95°) and in the vicinity of 270° (for example, 265° to 275°) as shown in Fig. 5A. Controller 17 detects 180°, which corresponds to an intermediate angular position between 85° and 275°, as a rotational angle of detecting body 12. Even in a state, in which detecting body 12 is rotated 180° from this state, however, light receiving device 16 likewise outputs to controller 17 two signals in the vicinity of 90° and in the vicinity of 270°. Therefore, it is hard for controller 17 to discriminate between a rotational angle between 0° and 179° and a rotational angle between 180° and 359°.

In contrast, light transmitting path 13C being a third light transmitting path is provided between light transmitting path 13A and light transmitting path 13B in Fig. 4B, whereby three signals in the vicinity of 90°, in the vicinity of 180°, and in the vicinity of 270° are output to controller 17 as shown in Fig. 5B.

Accordingly, controller 17 can determine from these three signals that detecting body 12 is rotated a range of 90° to 270°. Therefore, controller 17 can detect 180°, which is an intermediate angular position between 85° and 275°, as a rotational angle of detecting body 12. That is, the same effect as that produced in the case where semi-circular shaped light transmitting path 13 is provided can be produced by providing two opposite light transmitting path 13A and light transmitting path 13B on detecting body 12 and providing a further one light transmitting path 13C between them.

With this structure, in the case where light receiving device 16 is offset from detecting body 12, controller 17 can detect the same angle as that in the case where off-center is absent, as a rotational angle. In this manner, even in the case where some off-center is generated on respective, constituent parts, controller 17 can correctly detect a rotational angle.

In order that controller 17 correctly detects a rotational angle of detecting body 12 even when light receiving device 16 is shifted relatively to detecting body 12, light transmitting paths 13A, 13B may be shaped as shown in the plan view of Fig. 4C in addition to being shaped as shown in Fig. 4A. That is, it suffices the requirement that straight line 131 connecting between both ends of light transmitting paths 13A, 13B, which correspond to both ends of the light receiving range of light receiving device 16, constitutes a part of light transmitting paths 13A, 13B.

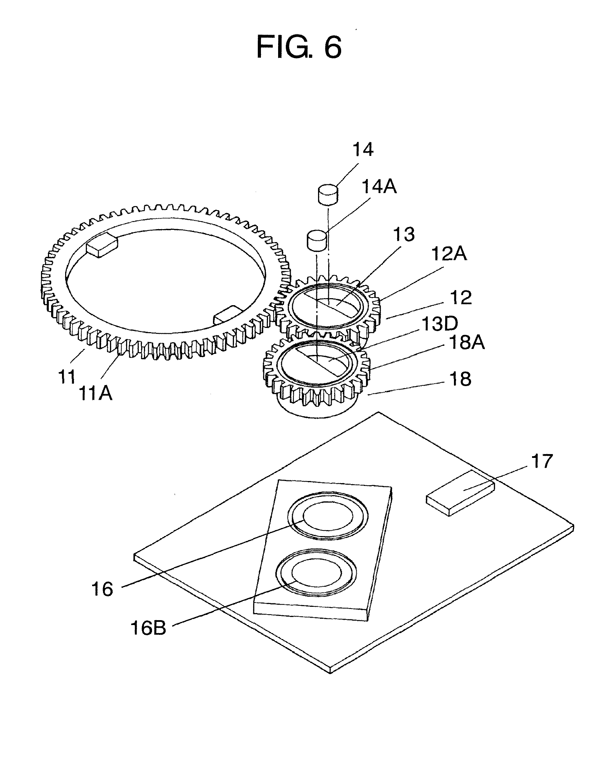

Further, as shown in an exploded, perspective view of Fig. 6, detecting body 18 being a second detecting body formed on an outer periphery thereof with spur gear portion 18A, which is different in the number of teeth from detecting body 12, is preferably provided in addition to detecting body 12, which meshes with rotor 11. Detecting body 18 meshes with spur gear portion 12A of detecting body 12 and detecting body 18 is provided with light transmitting path 13D, which is a fourth semi-circular shaped light transmitting path. Arranged above and below them are light emitting devices 14, 14A, which are first and second light emitting devices, and light receiving devices 16, 16B, which are first and second light receiving devices. With such construction, it is possible to detect an absolute angle of rotor 11 including information of the numbers of rotation and the rotating direction of rotor 11.

When the steering is rotated, rotor 11 is rotated accordingly and detecting bodies 12, 18 rotate relatively to rotor 11. Light receiving devices 16, 16B, respectively, receive light from light emitting devices 14, 14A, which passes through light transmitting paths 13, 13D. Light receiving devices 16, 16B output signals in the angular range, which are detected by them, to controller 17. Since detecting body 12 is different in the number of teeth from detecting body 18, detecting body 12 is different in rotating angular velocity from detecting body 18 and signals of the angular ranges are different from each other.

Controller 17 calculates an absolute angle of rotor 11 from different angles output from light receiving devices 16, 16B and different numbers of teeth of detecting bodies 12 and 18. With such construction, since controller 17 detects the number of rotations and the rotating direction of detecting body 12 at a time, it is possible to detect the absolute angle of rotor 11 with a high resolution. A method of detecting an absolute angle of a rotor with the use of a detection phase difference of two detecting bodies, which are different in the number of teeth from each other, is disclosed in, for example, United States Patent No. 6, 861, 837. Even with a construction, in which both detecting bodies 12 and 18 mesh with rotor 11, it is possible to detect an absolute angle in the same manner.

As described above, rotational angle detector 20 includes rotor 11, detecting body 12, light emitting device 14, annular-shaped light receiving device 16, and controller 17 mounted to wiring board 15. Detecting body 12 rotates relatively to rotor 11. Detecting body 12 is provided with light transmitting path 13 which permits light to pass in a direction parallel to a rotating axis of detecting body 12. Alternatively, detecting body 12 is provided with light transmitting paths 13A, 13B, and 13C. Light emitting device 14 is provided at a position in which light emitting device 14 emits light toward detecting body 12 in a direction parallel to the rotating axis of detecting body 12. Light receiving device 16 is arranged in an opposite side of detecting body 12 with respect to light emitting device 14. Controller 17 is connected to light emitting device 14 and light receiving device 16 and detects a rotational angle of rotor 11 from a light receiving range of light receiving device 16. Such construction makes it possible to detect a rotational angle of rotor 11 at intervals of 1° or less and becomes hard to be influenced by dust, etc. Therefore, rotational angle detector 20 can detect a rotational angle with a high resolution in a simple construction.

While controller 17 makes an intermediate angular position in the light receiving range of light receiving device 16 a rotational angle position of detecting body 12, this invention is not limited thereto. A position of a predetermined angular ratio in the light receiving range of light receiving device 16 may be made a rotational angle position of detecting body 12.

Preferably, straight line 131 connecting between positions corresponding to both ends of the light receiving range of light receiving device 16 constitutes a part of light transmitting paths 13A, 13B. With this structure, even when light receiving device 16 is offset from detecting body 12, controller 17 can correctly detect a rotational angle of detecting body 12.

By making light transmitting path 13 semi-circular in planar shape, controller 17 can detect a rotational angle of light receiving device 16 in a wide light receiving range, which amounts to about 180°. Therefore, it is possible to correctly detect a rotational angle without errors.

### Second Exemplary Embodiment

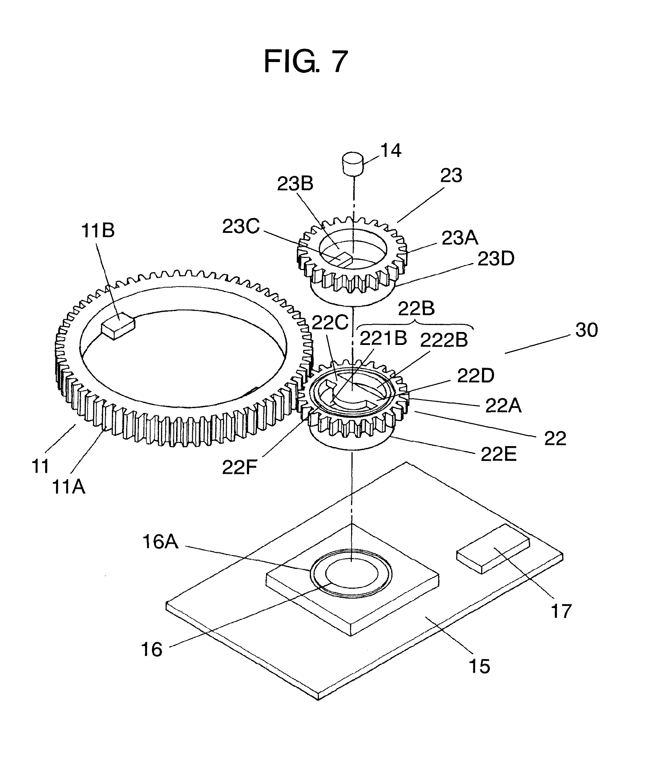

Fig. 7 is an exploded, perspective view showing a rotational angle detector according to a second exemplary embodiment of the present invention. Rotational angle detector 20, which is illustrated with reference to Figs. 1 to 3C, in the first exemplary embodiment and rotational angle detector 30 according to the present exemplary embodiment are different in the structure of detecting bodies from each other. In the following descriptions, the same constituents as those in the first exemplary embodiment are denoted by the same reference numerals as those in the latter to be described, and a different construction from that of the first exemplary embodiment will be described in detail.

Spur gear portion 22A having, for example, the number of teeth being 1/3 the number of teeth of rotor 11 is formed on an outer periphery of detecting body 22 being a first detecting body. Spur gear portion 23A being different in the number of teeth from detecting body 22 is formed on an outer periphery of detecting body 23 being a third detecting body. Detecting body 22 and detecting body 23 are arranged overlapping each other vertically and spur gear portions 22A, 23A mesh with spur gear portion 11A. That is, detecting body 23 is arranged overlapping detecting body 22 so as to rotate relatively to rotor 11 and to have its rotating axis agreeing with a rotating axis of detecting body 22. Light emitting device 14 is provided at a position, in which light emitting device 14 emits light toward detecting body 23 in a direction parallel to the rotating axis of detecting body 22.

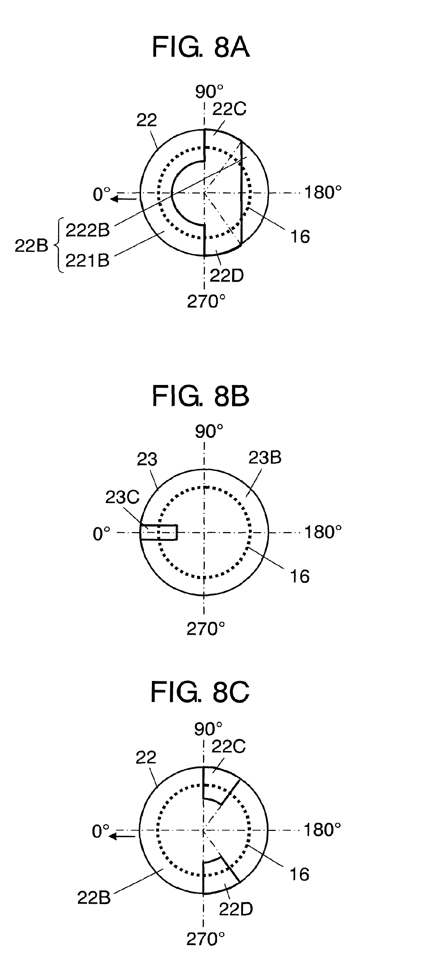

Detecting body 22 includes shielding portions 22C and 22D projecting inwardly of light transmitting path 22B which is a first light transmitting path. Shielding portions 22C and 22D are first and second shielding portions, respectively. Shielding portion 22D projects at a position opposed to shielding portion 22C. Specifically, shielding portion 22C projects in the range of 90° to 130° and shielding portion 22D projects in the range of 230° to 270°. In Fig. 7, shielding portions 22C, 22D are provided integrally with each other to divide light transmitting path 22B into light transmitting paths 221B and 222B. An angle of shielding portions 22C, 22D in a position, in which light receiving device 16 receives light, is set to 40°. Alternatively, shielding portions 22C, 22D may be provided separately as shown in a plan view of Fig. 8C.

Detecting body 23 is provided with light transmitting path 23B, which is a fifth light transmitting path to permit light to pass in a direction parallel to its rotating axis, and includes shielding portion 23C, which is a third shielding portion projecting inwardly of light transmitting path 23B. Shielding portion 23C projects inward in a different position from those of shielding portions 22C, 22D. Specifically, shielding portion 23C projects in a 0° position perpendicular to shielding portions 22C, 22D.

Hollow, cylindrical-shaped rotating cylinder 22E projecting downward is formed on an underside of detecting body 22, and hollow, cylindrical-shaped rotating cylinder 23D projecting downward is formed on an underside of detecting body 23. Rotating cylinder 22E is rotatably inserted into rotating groove 16A on an upper surface of light receiving device 16 and rotating cylinder 23D is rotatably inserted into rotating groove 22F on an upper surface of detecting body 22.

With such construction, when the steering is rotated, rotor 11 is rotated accordingly and detecting bodies 22 and 23 are also rotated relatively. Light emitting device 14 emits light and the light passes through light transmitting paths 23B, 22B of detecting bodies 23, 22. Light receiving device 16 receives the light.

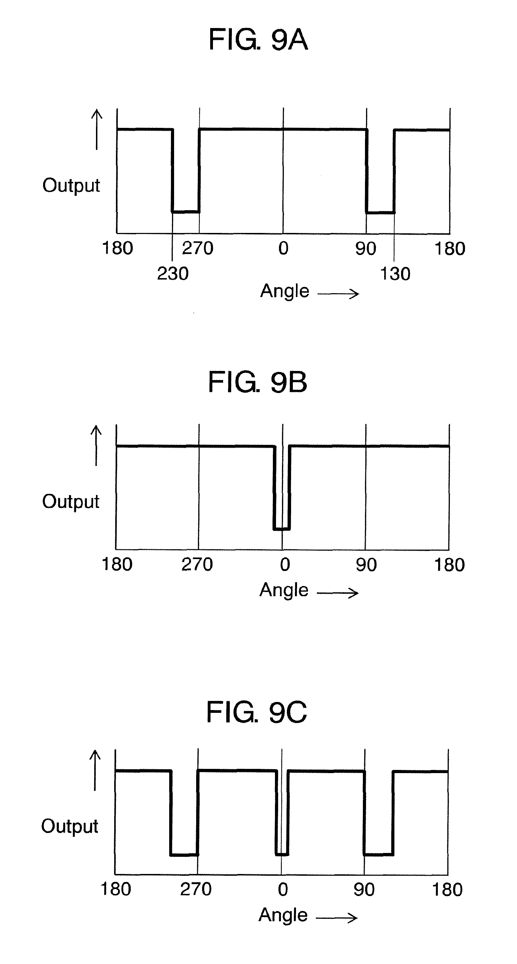

Shielding portions 22C, 22D are provided on light transmitting path 22B of detecting body 22. Therefore, in a state of 0° before detecting bodies 22, 23 are rotated, the light is intercepted in the range of 90° to 130° and in the range of 230° to 270° as shown in a plan view of Fig. 8A. Therefore, light receiving device 16 is subjected to receive light in other ranges than the ranges as shown in Fig. 9A, which illustrates an output waveform.

Shielding portion 23C is provided in the 0° position on light transmitting path 23B of detecting body 23 as shown in Fig. 8B. Therefore, the light is also intercepted in the position and light receiving device 16 is subjected to receive light in a range shown in Fig. 9B. As a result, light receiving device 16 outputs to controller 17 a signal of light intercepted in the ranges of shielding portion 22C, 22D, 23C as shown in Fig. 9C.

Controller 17 detects from the signal that shielding portion 23C is positioned at 0° centering between 270° shielded by shielding portion 22D and 90° shielded by shielding portion 22C. Controller 17 also detects 0° being an intermediate angular position between 230° and 130°, which is a light receiving range of light passing through light transmitting path 222B, as a rotational angle.

Controller 17 continues to monitor a region of 100° between shielding portions 22C and 22D and calculates a rotational angle on the basis of a light receiving angular position in the region wherever shielding portions 22C and 22D are present. Alternatively, the pair of shielding portions 22C, 22D and shielding portion 23C may be formed with different widths, whereby controller 17 can distinguish between shielding portions 22C, 22D and shielding portion 23C. Accordingly, controller 17 can detect angular positions of shielding portions 22C, 22D. Based on the results of detection, controller 17 may determine a region, in which controller 17 detects an angle, and calculate a rotational angle.

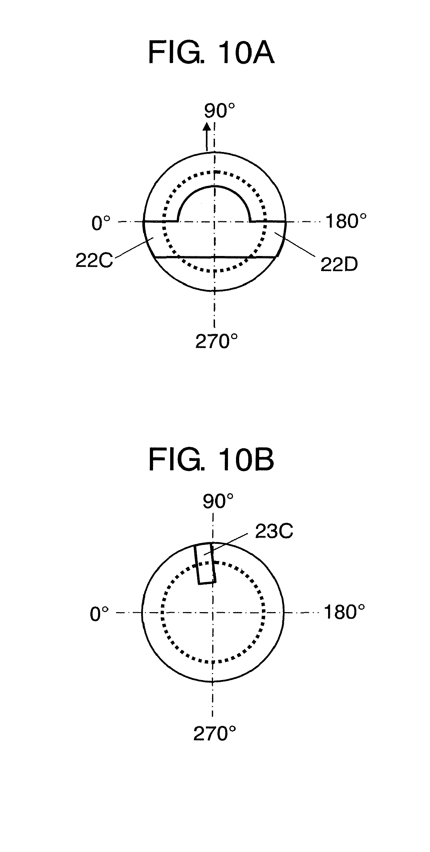

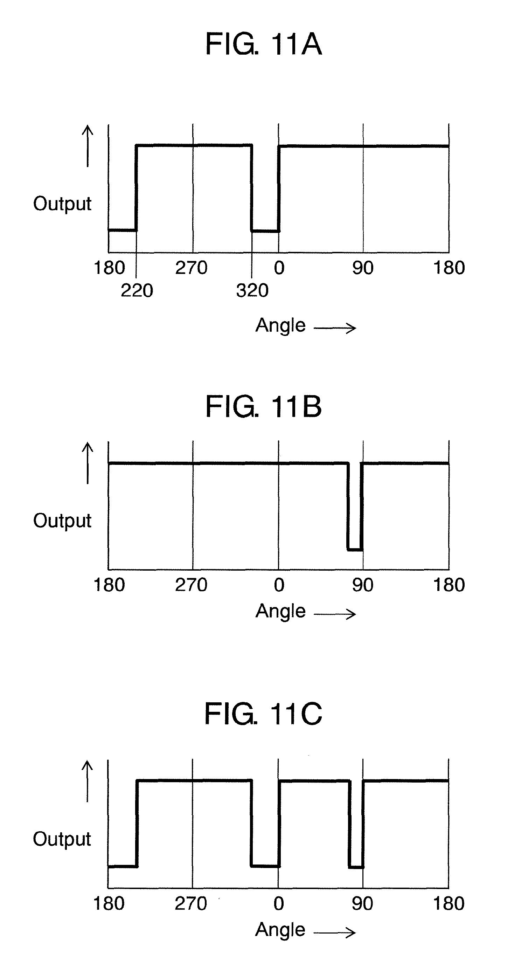

When rotor 11 is rotated 30°, detecting body 22 is correspondingly rotated 90°. In this case, shielding portions 22C, 22D of detecting body 22 intercept light from light emitting device 14 in the range of 320° to 0° and in the range of 180° to 220° as shown in a plan view of Fig. 10A. As a result, light receiving device 16 is subjected to receive light in that range shown in Fig. 11A which illustrates an output waveform.

Likewise, shielding portion 23C of detecting body 23 intercepts light from light emitting device 14. Since detecting body 23 is different in the number of teeth from detecting body 22, detecting body 23 is rotated only, for example, 81° less 9° than the angle as shown in Fig. 10B in a state, in which detecting body 22 is rotated 90°. Therefore, light receiving device 16 is subjected to receive light in that range, in which light around 81° is intercepted as shown in Fig. 11B. As a result, light receiving device 16 outputs a signal shown in Fig. 11C to controller 17.

Controller 17 detects from the signal that shielding portion 23C is positioned offset from 90° centering between 0° shielded by shielding portion 22C and 180° shielded by shielding portion 22D. Controller 17 also detects 90°, which is an intermediate angular position between 320° and 220°, as a rotational angle.

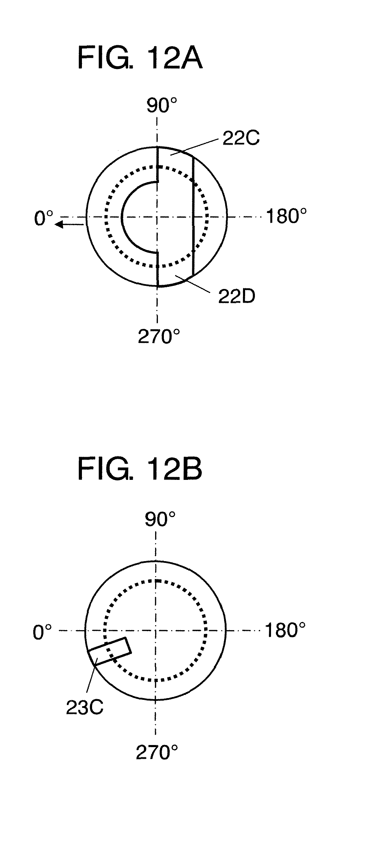

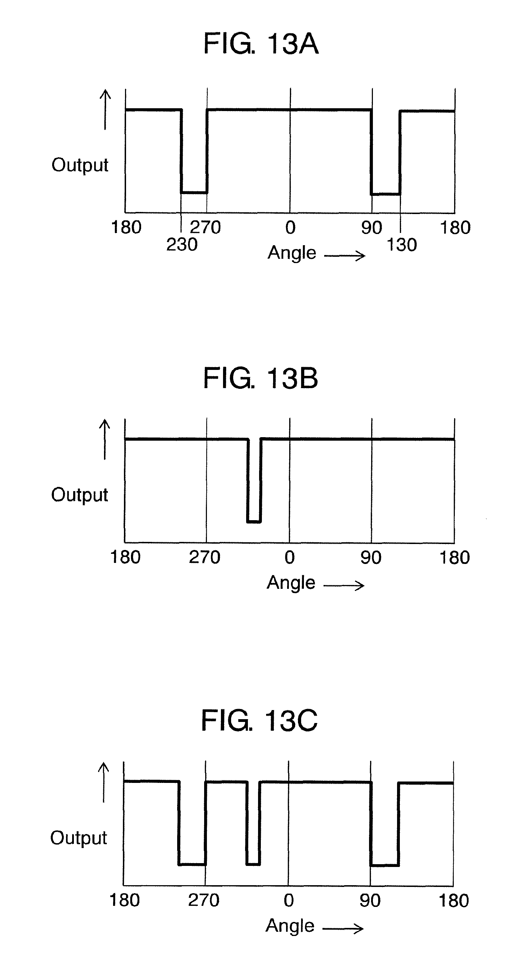

In the case where rotor 11 is rotated 120° and detecting body 22 is rotated 360°, shielding portions 22C, 22D come to the same positions as those in the state shown in Fig. 8A as shown in a plan view of Fig. 12A. Therefore, light is intercepted in the range of 90° to 130° and in the range of 230° to 270°. Light receiving device 16 is thus subjected to receive light in the same range as that in the case of Fig. 9A as shown in Fig. 13A, which illustrates an output waveform.

Detecting body 23 is different in the number of teeth from detecting body 22. Therefore, detecting body 23 is rotated only, for example, 324° less 36° than 360° as shown in Fig. 12B. As a result, light receiving device 16 is subjected to receive light in that range, in which light around 324° is intercepted as shown in Fig. 13B. Light receiving device 16 outputs a signal shown in Fig. 13C to controller 17.

Controller 17 detects from the signal that shielding portion 23C is positioned offset 36° from 0° centering between 90° shielded by shielding portion 22C and 270° shielded by shielding portion 22D. Thereby, controller 17 determines that detecting body 22 has made one rotation. Therefore, controller 17 determines that 0°, which is an intermediate angular position between 230° and 130°, to be 360° as a rotational angle.

In this manner, controller 17 detects the number of rotations of detecting body 22 depending upon where shielding portion 23C is positioned in 180° being a range, which is set by shielding portions 22C, 22D and in which light can be received. An intermediate angular position between 230° and 130° in a wider range than the range, 180°, is detected as a rotational angle. In other words, shielding portions 22C, 22D divide light transmitting path 22B into light transmitting path 221B which is a wide angular range, and light transmitting path 222B which is a narrow angular range. Controller 17 detects 180° plus an angle being an intermediate angular position in that range, in which light passing through light transmitting path 222B is received, as arotational angle (relative angle) in the range of 0° to 359°. Controller 17 also detects the number of rotations and the rotating direction of detecting body 22 from a relative position of shielding portion 23C on light transmitting path 221B. Accordingly, controller 17 detects an absolute angle of rotor 11 only by a set of light emitting device 14 and light receiving device 16, which are arranged above and below detecting bodies 22, 23.

In this manner, controller 17 detects a rotational angle of detecting body 22 on basis of the light receiving range, in which light receiving device 16 having received light passing between shielding portion 22C and shielding portion 22D outputs. At that time, controller 17 detects the number of rotations and the rotating direction of rotor 11 depending upon a position of shielding portion 23C, thereby detects an absolute angle of rotor 11, which includes the information. That is, as compared with the construction of Fig. 6 in the first exemplary embodiment, an absolute angle of rotor 11 can be detected by one pair of light emitting device 14 and light receiving device 16 according to the present exemplary embodiment. In this manner, it is possible to form a rotational angle detector which is small in number of parts and inexpensive, and which is simple in construction and capable of detecting a rotational angle with a high resolution.

As described above, controller 17 calculates a relative angle of detecting body 22 on basis of that light receiving range, in which light being transmitted between shielding portions 22C and 22D is received. Accordingly, as similar to the first exemplary embodiment, a straight line connecting between positions, which correspond to both ends of the light receiving range of light receiving device 16, preferably constitutes a part of light transmitting path 222B. That is, the construction shown in Fig. 8A is more preferable than the construction shown in Fig. 8C. With such a construction, even when light receiving device 16 is offset from detecting body 22, controller 17 can correctly detect a rotational angle of detecting body 22.

In the description described above, spur gear portions are formed on outer peripheries of rotor 11, detecting bodies 12, 18, 22 and 23 and they mesh with one another and rotate relatively to one another. However, the present invention is not limited thereto. Otherwise-shaped gears, such as bevel gears, etc., than spur gear portions can be used, or in place of gears, irregular portions, high-friction portions, etc. capable of transmitting rotation may be formed on outer peripheries of a rotor and detecting bodies to be rotated relatively to each other. While light receiving devices 16, 16B are structured to include photosensors, etc. arranged 360 at intervals of 1° in a ring-shaped manner, they are not limited thereto. Sensors capable of outputting a light receiving range can be used as light receiving devices 16, 16B.

As described above, the rotational angle detector according to the present invention can be realized, which is simple in construction and capable of detecting a rotational angle with a high resolution, and is useful in detection of a rotational angle of a steering in an automobile.

## Claims

1. A rotational angle detector comprising:
a rotor,
a first detecting body configured to rotate relatively to the rotor and provided with a first light transmitting path permitting light to pass in a direction parallel to a rotating axis thereof,
a first light emitting device provided at a position to emit light toward the first detecting body in a direction parallel to the rotating axis of the first detecting body,
a first, annular-shaped light receiving device arranged on an opposite side of the first detecting body with respect to the first light emitting device, the first light receiving device being configured to output a light receiving range, and
a controller connected to the first light receiving device, the controller being configured to detect a rotational angle of the rotor on based on the light receiving range output from the first light receiving device.

2. The rotational angle detector according to claim 1, wherein a straight line connecting between positions corresponding to both ends of the light receiving range of the first light receiving device, constitutes a part of the first light transmitting path.

3. The rotational angle detector according to claim 1, wherein the first detecting body is provided with a second light transmitting path, which permits light to pass in a direction parallel to a rotating axis thereof, and a third light transmitting path between the first light transmitting path and the second light transmitting path, and the controller detects the rotational angle of the rotor from a light receiving position on a side of light which transmits through the first light transmitting path, distant from the third light transmitting path, and a light receiving position on a side of light which transmits through the second light transmitting path, distant from the third light transmitting path.

4. The rotational angle detector according to claim 3, wherein a straight line connecting between positions corresponding to both ends of a light receiving range of the first light receiving device, constitutes a part of the first light transmitting path and a part of the second light transmitting path.

5. The rotational angle detector according to claim 1, further comprising:
a second detecting body configured to rotate relatively to the rotor at a rotating angular velocity different from that of the first detecting body, the second detecting body being provided with a fourth light transmitting path which permits light to pass in a direction parallel to a rotating axis thereof,
a second light emitting device provided at a position to emit light toward the second detecting body in a direction parallel to the rotating axis of the second detecting body, and
a second, annular-shaped light receiving device arranged on an opposite side of the second detecting body with respect to the second light emitting device, the second light receiving device being configured to output a light receiving range,
wherein the controller detects an absolute angle of the rotor including information of numbers of rotation and a rotating direction of the rotor, using a detection phase difference between the first detecting body and the second detecting body when the controller detects the rotational angle of the rotor based on the light receiving range output from the first light receiving device.

6. The rotational angle detector according to claim 1, further comprising a third detecting body configured to rotate relatively to the rotor, and arranged to overlap the first detecting body so that a rotating axis thereof agrees with the rotating axis of the first detecting body, the third detecting body being provided with a fifth light transmitting path permitting light to pass in a direction parallel to a rotating axis thereof,
wherein the first detecting body includes a first shielding portion projecting inwardly of the first light transmitting path, and a second shielding portion projecting inside the first light transmitting path in a position opposed to the first shielding portion,
the third detecting body further includes a third shielding portion projecting inwardly of the fifth light transmitting path in a different position from those of the first shielding portion and the second shielding portion,
the first light emitting device is provided in a position to emit light toward the third detecting body in a direction parallel to the rotating axis of the first detecting body, and
the controller detects an absolute rotational angle of the rotor by detecting numbers of rotation and a rotating direction of the rotor based on a position of the third shielding portion, when the controller detects the rotational angle of the first detecting body based on the light receiving range output from the first light receiving device which receives light passing between the first shielding portion and the second shielding portion, the absolute rotational angle including information of the numbers of rotation and the rotating direction of the rotor.
